(19) **Europäisches Patentamt / European Patent Office / Office européen des brevets**

(11) **EP 3 009 349 B1**

(12) **FASCICULE DE BREVET EUROPEEN**

(45) Date de publication et mention
de la délivrance du brevet:
**21.09.2016 Bulletin 2016/38**

(51) Int Cl.:
**B64C 27/04** *(2006.01)*   **B64D 15/00** *(2006.01)*
**B64D 31/06** *(2006.01)*

(21) Numéro de dépôt: **15186324.8**

(22) Date de dépôt: **22.09.2015**

(54) **METHODE DE REGULATION SOUS CONDITIONS GIVRANTES DE LA VITESSE D'ENTRAINEMENT D'UN ROTOR DE GIRAVION**

EINSTELLMETHODE DER ANTRIEBSGESCHWINDIGKEIT EINES ROTORS EINES DREHFLÜGELFLUGZEUGS UNTER VEREISUNGSBEDINGUNGEN

A METHOD OF REGULATING THE SPEED AT WHICH A ROTORCRAFT ROTOR IS DRIVEN UNDER ICING CONDITIONS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **14.10.2014 FR 1402311**

(43) Date de publication de la demande:
**20.04.2016 Bulletin 2016/16**

(73) Titulaire: **Airbus Helicopters**
**13725 Marignane Cedex (FR)**

(72) Inventeurs:
• **LESCHI, Robert**
**13004 MARSEILLE (FR)**
• **MÜNZING, Andrea**
**13300 SALON DE PROVENCE (FR)**

(74) Mandataire: **Pouillot, Laurent Pierre Paul**
**GPI & Associés**
**1330, Rue Guillibert de la Lauzière**
**EuroParc de Pichaury, Bât B2**
**13856 Aix-en-Provence Cedex 3 (FR)**

(56) Documents cités:
EP-A1- 2 626 557        WO-A2-2010/143051
FR-A1- 3 000 465        GB-A- 2 046 690
US-A1- 2007 118 254     US-A1- 2012 226 485

**Description**

La présente invention est du domaine des méthodes de dégivrage des surfaces extérieures des aéronefs. La présente invention relève plus spécifiquement des modalités de dégivrage des pales d'un rotor de giravion.

Dans le domaine de l'aéronautique, il se pose le problème du givrage des surfaces extérieures des aéronefs. En effet, un aéronef est potentiellement placé en vol sous des conditions givrantes provoquant la formation de givre voire de glace sur ses surfaces extérieures, ce qui n'est pas souhaitable. La formation de givre ou de glace sur les surfaces extérieures d'un aéronef provoque notamment son alourdissement et affecte ses caractéristiques aérodynamiques et donc ses performances.

Les conditions givrantes des surfaces extérieures d'un aéronef sont typiquement identifiées selon divers critères comprenant notamment, pour un aéronef de structure donnée, la structure globale de l'aéronef et l'agencement de ses surfaces extérieures prises en considération, le point de vol de l'aéronef dans son domaine de vol et les conditions atmosphériques.

Les conditions atmosphériques identifiant les conditions givrantes de surfaces extérieures d'un aéronef prises en considération varient classiquement selon plusieurs paramètres météorologiques dont les valeurs sont identifiées lors d'essais en vol.

Parmi de tels paramètres météorologiques, il est notamment pris en compte la température ambiante, la concentration d'eau dans l'air extérieur ambiant et le diamètre volumique moyen des gouttes d'eau contenues dans l'air extérieur ambiant.

Pour un giravion notamment, il est plus particulièrement constaté une perte de performance maximale des pales du ou des rotors du giravion lorsqu'il évolue sous conditions givrantes dans une plage de température ambiante déterminée ci-après désignée par « domaine critique de température ».

Le domaine critique de températures est notamment identifié par des capteurs de température, entre une température considérée basse et une température considérée haute. La concentration d'eau liquide dans l'air extérieur ambiant est par exemple communément identifiée par des détecteurs de givre et/ou par des sondes spécifiques.

Le diamètre volumique moyen des gouttes d'eau contenues dans l'air extérieur ambiant est notamment identifié par des sondes de granulométrie LASER (d'après l'acronyme anglais Light Amplification by Stimulated Emission of Radiation), telles que par des sondes dites FSSP (d'après l'acronyme anglais Forward Scattering Spectrometer Probe) ou CDP (d'après l'acronyme anglais Cloud Droplet Probe).

D'autres critères fondés sur le ressenti du pilote sont aussi potentiellement pris en compte pour identifier les conditions givrantes des surfaces extérieures d'un aéronef, tels qu'une variation du comportement de l'aéronef en vol et notamment de son comportement vibratoire.

Par suite des mesures effectuées au cours desdits vols d'essais, le pilote d'un aéronef de série, de même structure que l'aéronef utilisé au cours desdits vols d'essais, peut identifier les conditions givrantes auxquelles sont soumises les surfaces extérieures de l'aéronef de série et par suite peut adapter en conséquence le pilotage de l'aéronef de série.

Le pilote de l'aéronef de série identifie notamment lesdites conditions givrantes à partir des valeurs des paramètres météorologiques, fournies par l'instrumentation de bord de l'aéronef et/ou par une station météorologique, et à partir de son expérience de l'impact des conditions météorologiques sur le comportement de l'aéronef de série.

En outre, des moyens de dégivrage des surfaces extérieures de l'aéronef sont couramment mis en oeuvre sous dépendance d'une identification des conditions givrantes, soit par le pilote humain soit par des détecteurs de givre identifiant la présence de givre sur les surfaces extérieures de l'aéronef soit encore par des instruments tels que décrits dans le document GB 2 046 690 (Secretary of State for Defence). De tels instruments permettent en effet d'identifier la présence de givre sur les pales d'un rotor de giravion en comparant le couple moteur réel fourni au rotor par rapport à un couple moteur prédéterminé correspondant à un fonctionnement dans des conditions météorologiques normales, c'est-à-dire en l'absence de givre. Le couple moteur prédéterminé peut par exemple être calculé en fonction notamment du pas collectif (angle) des pales du rotor du giravion.

Dans ce contexte et plus particulièrement en ce qui concerne les giravions évoluant sous conditions givrantes, la formation de givre ou de glace sur les pales d'un rotor de giravion affecte les performances du rotor.

La formation de givre ou de glace sur les pales d'un rotor de giravion est particulièrement préjudiciable en ce qui concerne un rotor principal d'un giravion procurant essentiellement sa sustentation, voire aussi sa propulsion et/ou son guidage en vol dans le cas spécifique d'un hélicoptère.

En effet lorsqu'un giravion évolue sous conditions givrantes, une captation de givre ou de glace sur les pales du ou des rotors dont il est équipé diminue fortement ses performances. Une telle perte de performance du rotor est notamment induite par une rapide augmentation de la traînée des pales en raison du dépôt de givre ou de glace modifiant leur profil aérodynamique.

Par ailleurs, les rotors d'un giravion sont classiquement entraînés en rotation par un groupe de motorisation équipant le giravion et comprenant au moins un moteur à combustion, turbomoteur notamment.

Une unité de commande génère une consigne, dite consigne NR, relative à une vitesse d'entraînement individuelle du ou des rotors, rotor principal notamment, devant être procurée. La consigne NR est transmise à une unité de régulation régulant le régime de fonctionnement du ou des moteurs à combustion pour procurer un entraînement du ou des rotors, rotor principal notamment, à une vitesse, dite vitesse NR, conforme à la consigne NR.

Il a été subsidiairement proposé en ce qui concerne un rotor principal de giravion, de commander une variation de la valeur de la consigne NR dans une plage de valeurs de l'ordre comprise par exemple entre 92% et 107% d'une vitesse de rotation nominale d'entraînement du rotor principal. La variation de la valeur de la consigne NR est commandée par l'unité de commande selon divers critères pour procurer des résultats spécifiques, tels qu'une réduction du bruit généré par le rotor principal en phase d'approche d'un point de posé ou un accroissement des performances du giravion lors de son évolution selon différentes phases de vol spécifiques.

On pourra à ce propos se reporter par exemple aux documents FR3000465 (AIRBUS HELICOPTERS), US2007/118254 (BARNES G.W. et al.) et WO2010143051 (AGUSTA SPA et al.) qui divulguent diverses modalités de commande d'une telle variation de la vitesse NR d'un rotor principal de giravion.

Dans un domaine éloigné de la présente invention relevant des éoliennes productrices d'énergie électrique, il est connu des méthodes d'identification des conditions givrantes des pales d'un rotor d'une éolienne en fonction des conditions météorologiques.

On pourra par exemple se reporter à ce propos aux documents EP1936186 (GENERAL ELECTRIC Company), US20120226485 CREAGH A. et al.) et EP2626557 (SIEMENS AG).

Plus particulièrement concernant le document EP2626557, il est en outre proposé de limiter un givrage des pales du rotor d'une éolienne en faisant varier la vitesse de rotation dudit rotor. Plus particulièrement, des informations relatives au taux de perte de chaleur des pales sont collectées et le contrôle de la vitesse du rotor est opéré selon ces informations.

Le taux de perte de chaleur des pales est par exemple déterminé sur la base d'une simulation ou d'un modèle physique des pales lorsque le rotor est exposé à une température ambiante donnée et pour un vent ambiant donné caractérisé selon sa vitesse par rapport au sol.

Toujours selon EP2626557, il peut aussi être pris en compte la vitesse de rotation de l'éolienne, le taux de perte de chaleur des pales pouvant augmenter selon une diminution de la température ambiante, selon l'augmentation de la vitesse du vent et/ou selon l'augmentation de la vitesse de rotation de l'éolienne. Le contrôle de la vitesse de rotation de l'éolienne selon le taux de perte de chaleur des pales est par exemple réalisé par ajustement de la puissance électrique générée par l'éolienne.

Dans ce contexte, la présente invention a pour objet une méthode de régulation de la vitesse d'entraînement d'au moins un rotor équipant un giravion lorsque ledit giravion est placé sous conditions givrantes. Ledit au moins un rotor du giravion est notamment au moins un rotor principal à axe d'entraînement sensiblement vertical procurant essentiellement la sustentation du giravion, voire aussi sa propulsion et/ou son guidage en vol dans le cas spécifique d'un hélicoptère. Il est cependant compris que la méthode de la présente invention est potentiellement applicable à la régulation de la vitesse d'entraînement en rotation d'au moins un rotor annexe à axe sensiblement horizontal équipant le giravion.

Un tel rotor annexe forme classiquement un dispositif anti-couple procurant la stabilisation et/ou le guidage en lacet du giravion, en étant typiquement formé d'un rotor arrière porté à l'extrémité d'une poutre de queue équipant le giravion, ou encore en étant potentiellement formé d'une hélice propulsive dans le cadre d'un hélicoptère à vitesses élevées d'avancement.

Il est plus particulièrement visé par la présente invention de proposer une telle méthode permettant de contrôler les effets sur les performances dudit au moins un rotor d'un éventuel givrage des pales composant sa voilure lorsque le giravion est placé sous conditions givrantes.

Dans ce contexte, la méthode de la présente invention est une méthode de régulation d'une vitesse, dite vitesse NR, d'entraînement en rotation d'au moins un dit rotor d'un giravion, notamment mais pas exclusivement d'un rotor principal procurant essentiellement la sustentation du giravion.

Ladite vitesse NR varie dans une plage de variation de vitesses NR prédéfinie, sous contrôle d'au moins une unité de commande génératrice d'une consigne, dite consigne NR. A partir de ladite consigne NR, une unité de régulation régule le régime de fonctionnement d'au moins un turbomoteur fournissant la puissance mécanique au moins nécessaire à l'entraînement dudit au moins un rotor à une vitesse NR conforme à la consigne NR.

Selon la présente invention, la méthode comprend les opérations décrites ci-après.

En premier lieu, une évolution du giravion sous conditions givrantes est détectée. La température de l'air extérieur ambiant environnant le giravion est mesurée par l'instrumentation de bord du giravion, tel que notamment par un capteur de température équipant le giravion.

Puis, une évolution du giravion dans un environnement extérieur d'une température ambiante comprise dans une plage de valeurs prédéfinie, dite domaine critique de températures, est détectée. Ledit domaine critique de températures est notamment identifié entre une température haute et une température basse prédéterminées.

Tel que précédemment mentionné, le domaine critique de températures est préalablement typiquement identifié au cours de vols d'essais à bord d'un giravion d'essai de structure donnée. Dans le cas spécifique d'un rotor de giravion, rotor principal notamment, le domaine critique de températures varie classiquement dans une plage de températures comprise, à titre indicatif, entre une température haute de - 7°C (moins 7° Celsius) et une température basse de - 18°C (moins 18° Celsius).

Par ailleurs tel que précédemment mentionné, l'évolution du giravion sous conditions givrantes est potentiellement identifiée par la prise en compte d'au moins un critère d'identification d'une évolution du giravion sous conditions givrantes identifiant un risque sévère de givrage des pales dudit au moins un rotor.

De tels critères identifiant un risque sévère de givrage des pales du rotor comprennent par exemple, isolément ou en combinaison :

- ) pour un point de vol figé considéré, une variation du couple moteur d'entraînement du rotor par ledit au moins un turbomoteur, à titre indicatif de l'ordre de 5% par exemple,

- ) une variation du comportement vibratoire du giravion, notamment identifiée par le pilote humain du giravion voire potentiellement identifiée par l'instrumentation de bord du giravion détectant une brusque variation des phénomènes vibratoires du giravion,

- ) la concentration d'eau dans l'air extérieur ambiant, notamment identifiée à partir d'informations fournies par au moins un détecteur de givre et/ou des sondes spécifiques montés à bord du giravion par exemple, et/ou encore

- ) le diamètre volumique moyen des gouttes d'eau contenues dans l'air extérieur ambiant, potentiellement identifié par une sonde de granulométrie LASER par exemple.

En deuxième lieu il est considéré des plages givrantes de températures respectivement basses et hautes s'étendant de part et d'autre d'une température, dite médiane, du domaine critique de températures comprise entre lesdites températures respectivement basse et haute.

Il est plus particulièrement fait le choix, conformément à la démarche de l'invention, de scinder ledit domaine critique de températures en deux plages extrêmes de températures distinctes respectivement constituées par ladite plage givrante de températures basses et ladite plage givrante de températures hautes.

Par suite d'une détection d'une évolution du giravion dans un environnement extérieur d'une température ambiante comprise dans ledit domaine critique de températures, une loi de calcul d'une consigne NR, dite loi de calcul NR sous conditions givrantes, est appliquée par l'unité de commande selon les modalités suivantes :

- ) diminuer la vitesse NR dans le cas où la température de l'air extérieur ambiant est comprise dans la plage givrante de températures basses du domaine critique de températures, et
- ) augmenter la vitesse NR dans le cas où la température de l'air extérieur ambiant est comprise dans la plage givrante de températures hautes du domaine critique de températures.

Conformément à la démarche de la présente invention, il est constaté que l'échange d'énergie cinétique entre les pales et l'écoulement d'air comportant des gouttes d'eau heurtant le bord d'attaque des pales, génère un échauffement au moins des pales.

Dans ce contexte, il est proposé par la présente invention, lorsque le giravion évolue dans la plage givrante de températures basses, de diminuer la vitesse NR avec pour effet de diminuer la température de surface des pales du rotor, ce qui permet d'obtenir la production de formes plus aérodynamiques de la glace captée sur les pales en raison d'un bilan thermodynamique à la surface des pales plus propice à la formation de glace de type connu désigné par « givre blanc » ou « givre opaque », ou encore sous la désignation courante en langue anglaise de « rime ice ».

En outre toujours conformément à la démarche de la présente invention, il est aussi constaté que plus la température de l'air extérieur ambiant diminue dans le domaine critique de températures, plus la concentration d'eau dans l'air extérieur ambiant diminue. Il est plus particulièrement proposé par la présente invention d'exploiter une potentielle réduction de la captation de glace sur les pales du rotor par suite d'une telle diminution de la concentration d'eau dans l'air extérieur ambiant.

Par ailleurs lorsque le giravion évolue dans la plage givrante de températures hautes, il est fait le choix d'augmenter la vitesse NR pour éviter la formation de givre et/ou de glace sur les pales, en exploitant la faculté offerte d'échauffement des pales lors de l'impact contre leur bord d'attaque des gouttes d'eau en surfusion contenues dans l'air extérieur ambiant. Il est plus particulièrement proposé par la présente invention d'exploiter un tel échauffement des pales pour faire obstacle à la formation de givre et/ou de glace sur les pales lorsque le giravion évolue dans ladite plage givrante de températures hautes.

On rappelle à ce propos que selon la loi de conservation de l'énergie, ledit échauffement des pales s'exprime selon la fonction suivante :

$$Ttot - Ts = V^2/2*J*Cp$$

dans laquelle fonction :

Ttot est la température absolue en degrés Kelvin,

Ts est la température statique en degrés Kelvin,

V est la vitesse relative de l'air par rapport à une pale donnée du rotor,

J est l'équivalent mécanique de la calorie,

Cp est la chaleur massique de l'air à pression constante.

Autrement dit l'échauffement des pales du rotor, qui est proportionnel à la vitesse de l'air par rapport à une pale donnée élevée à la puissance 2, est d'autant plus important que la vitesse d'entraînement en rotation du rotor est élevée.

Finalement de telles dispositions permettent de limiter les effets potentiellement produits par la formation de givre et/ou de glace sur l'augmentation de la traînée des pales, lorsque le giravion évolue sous conditions givrantes à une température de l'air extérieur ambiant comprise dans le domaine critique de températures. En effet lorsque le giravion évolue à une température de l'air extérieur ambiant comprise dans ladite plage givrante de températures basses, il est obtenu une production de formes plus aérodynamiques de la glace captée sur les pales. Par ailleurs, la formation de givre et/ou de glace sur les pales du rotor est limitée lorsque le giravion évolue sous conditions givrantes à une température de l'air extérieur ambiant comprise dans ladite plage givrante de températures hautes.

Pour des températures inférieures aux températures définissant le domaine critique de températures, les pales sont entièrement givrées. Cependant le givrage des pales dans ces conditions se produit selon une conformation de la glace captée sur les pales du rotor moins pénalisante sur les performances du rotor.

Il ressort finalement des choix et des dispositions proposées par la présente invention qu'à partir de la variation de la vitesse NR, en augmentation ou en diminution selon la plage givrante de températures considérée, les effets globalement produits sur la perte de performances du rotor lorsque le giravion évolue sous conditions de givrage sont atténués.

Plus particulièrement, la méthode de la présente invention comprend les opérations suivantes :

- ) détection, notamment par l'instrumentation de bord et/ou par le pilote humain du giravion, d'une évolution du giravion sous conditions givrantes. Lors d'une telle détection d'une évolution du giravion sous conditions givrantes, il est effectué au moins une opération de mesure par l'instrumentation de bord du giravion de la température de l'air extérieur ambiant environnant le giravion.

- ) identification d'une évolution du giravion à une température de l'air extérieur ambiant comprise soit dans l'une soit dans l'autre des plages givrantes de températures respectivement basses et hautes du domaine critique de températures. Une telle opération d'identification est notamment effectuée par comparaison de la température de l'air extérieur ambiant avec les températures bornant chacune des plages givrantes de températures respectivement basses et hautes. Pour rappel, la plage givrante de températures hautes est bornée entre la température haute et la température médiane, et la plage givrante de températures basses est bornée entre la température médiane et la température basse.

- ) identifier la valeur de la consigne NR courante générée par l'unité de commande, puis

  *) dans le cas où la température de l'air extérieur ambiant est exclue du domaine critique de températures, maintenir la génération par l'unité de commande de la consigne NR courante,

  *) dans le cas où la température de l'air extérieur ambiant est comprise dans la plage de températures hautes, augmenter par l'unité de commande la valeur de la consigne NR courante dans la plage de variation de vitesses NR,

\*) dans le cas où la température de l'air extérieur ambiant est comprise dans la plage givrante de températures basses, diminuer par l'unité de commande la valeur de la consigne NR courante dans la plage de variation de vitesses NR.

Selon une forme de réalisation, les opérations alternatives d'augmentation et inversement de diminution de la vitesse NR sous conditions givrantes, sont opérées conformément à l'application de consignes NR respectives de valeurs égales aux valeurs bornant ladite plage de variation de vitesses NR.

Il est bien évidemment compris que pour opérer la diminution de la vitesse NR, la valeur de la consigne NR générée correspond à la valeur basse de ladite plage de variation de vitesses NR, à titre indicatif de l'ordre de 92% d'une vitesse de rotation nominale d'entraînement en ce qui concerne un rotor principal.

De même pour opérer l'augmentation de la vitesse NR, la valeur de la consigne NR correspond à la valeur haute de ladite plage de variation de vitesses NR, à titre indicatif de l'ordre de 107% de ladite vitesse de rotation nominale d'entraînement en ce qui concerne un rotor principal.

Selon une autre forme de réalisation, les opérations alternatives d'augmentation et inversement de diminution de la vitesse NR sous conditions givrantes, sont opérées conformément à l'application de consignes NR respectives dont les valeurs varient selon la variation de la température de l'air extérieur ambiant dans la plage givrante de températures considérée.

Par exemple et pour éviter une variation soutenue de la valeur de la consigne NR, la variation de valeur des consignes NR selon la variation de la température de l'air extérieur ambiant est opérée par prise en compte de tranches de variation de températures prédéfinies, à titre indicatif et pour exemple de l'ordre comprises entre 1 °C et 3°C inclus.

Par ailleurs, il est préféré de restreindre l'exécution de ladite opération de variation NR sous conditions givrantes, dans le cas où une variation de la vitesse NR est opérée selon d'autres critères, tels que par exemple les critères pris en compte dans le document FR3000465 précédemment mentionné.

Plus particulièrement selon une forme préférée de réalisation, ladite loi de calcul NR sous conditions givrantes est appliquée sous réserve de l'exécution prioritaire d'au moins une quelconque autre loi de calcul provoquant une variation de la vitesse NR.

Il est bien évidemment compris dans ce contexte que la priorité d'exécution de ladite au moins une quelconque loi de calcul est notamment prise en compte au regard de la sécurisation de la progression du giravion.

Ladite réserve d'exécution de l'opération de variation NR sous conditions givrantes est opérée conformément à l'application d'une table prédéfinie d'exécution prioritaire de différentes lois de calcul prédéfinies d'une variation de la vitesse NR.

Il est à relever que ladite loi de calcul NR sous conditions givrantes peut être avantageusement intégrée dans une règle de calcul intégrant en outre au moins une quelconque autre loi de calcul provoquant une variation de la vitesse NR.

De telles dispositions sont particulièrement avantageuses dans le cas où une telle règle de calcul, telle que par exemple divulguée par le document FR3000465, procure potentiellement une variation continue de la vitesse NR fondée sur la variation de la valeur d'au moins un paramètre physicochimique de l'air, tel que sa masse volumique.

La consigne NR alors déduite peut être corrigée par des lois de calcul spécifiques de la variation de la valeur de divers paramètres pris en compte pour faire varier la vitesse NR.

L'évolution du giravion sous conditions givrantes est potentiellement détectée par un pilote humain du giravion, notamment par ressenti par le pilote du giravion d'une modification du comportement en vol du giravion incluant notamment les phénomènes vibratoires ou par exemple encore à partir d'une observation par le pilote humain d'une formation de glace sur les parois et/ou accessoires extérieurs du giravion, tel qu'un essuie-glace de nettoyage des parois transparentes du giravion ou sur tout élément extérieur protubérant du giravion et/ou toute paroi du giravion placée dans le champ de vision du pilote humain.

Par suite, le pilote humain du giravion génère alors, en cas d'une telle détection, un ordre d'exécution de la loi de calcul NR sous conditions givrantes, par exemple par activation d'un bouton de commande spécifique pouvant être avantageusement intégré à un organe générateur de commandes manuelles de vol sous l'effet de son entraînement par l'homme.

Isolément ou en combinaison avec les dispositions précédentes, l'évolution du giravion sous conditions givrantes est potentiellement encore détectée par un détecteur de givre générant alors une donnée de givrage provoquant l'exécution de la loi de calcul NR sous conditions givrantes.

Ladite température médiane du domaine critique de températures est potentiellement d'une valeur répartissant à valeurs égales les plages givrantes de températures respectivement basses et hautes.

Il est cependant préféré de déterminer par calcul la valeur de ladite température médiane selon la structure du giravion. Plus particulièrement et pour exemple, ladite température médiane isolant dans le domaine critique de températures les plages givrantes de températures respectivement basses et hautes l'une de l'autre est déterminée par la fonction de calcul suivante :

$$OAT_{(critique)} = - ((y-1) \ / \ 2yA) * ((2\pi*NR*R) \ / \ 60)^2$$

dans laquelle fonction de calcul :

- ) $OAT_{(critique)}$ est ladite température médiane,

- ) y est une constante d'une valeur de 1,4 relative au rapport des chaleurs massiques de l'air, telle que JCp = yA / (y-1) aux vitesses subsoniques,

- ) A est d'une valeur de 287J/Kg°K est la constante des gaz parfaits relative à l'air,

- ) NR est la vitesse NR courante du rotor en rotation exprimée en tours par minute,

- ) R est le rayon du rotor, l'expression (($2\pi*NR*R$) / 60) identifiant la vitesse en mètres par seconde du bout de ladite pale considérée en rotation.

L'unité de commande calcule itérativement à fréquence donnée la valeur de la consigne NR en fonction des valeurs de température de l'air extérieur ambiant fournies en continu ou séquentiellement par l'instrumentation de bord du giravion.

Des exemples de réalisation de la présente invention vont être décrits en relation avec les figures des planches annexées, dans lesquelles :

- la fig.1 est un schéma illustrant des modalités de variation de la vitesse NR d'un rotor d'un giravion selon une approche générale de la méthode de la présente invention.

- la fig.2 est un schéma fonctionnel illustrant des modalités spécifiques de mise en oeuvre de la méthode de la présente invention.

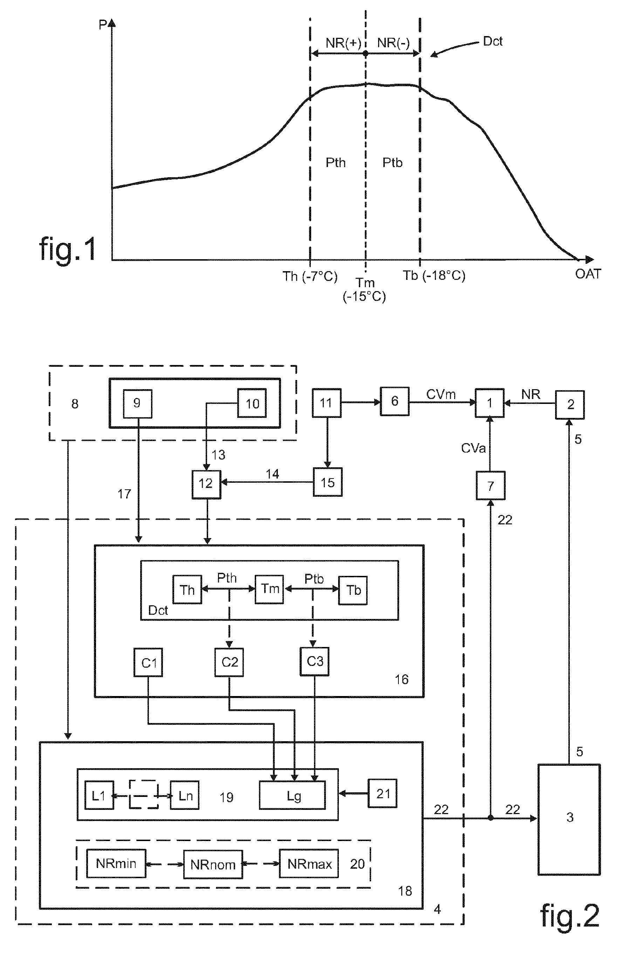

Sur la fig.1, un schéma représente une courbe illustrant la variation de la puissance P nécessaire à l'entraînement d'un rotor de giravion en fonction de la variation de la température OAT de l'air extérieur ambiant environnant le giravion.

Lorsque le giravion évolue sous conditions givrantes, il est typiquement identifié un domaine critique de températures Dct dans lequel les pales du rotor sont soumises à un risque de givrage. Le domaine critique de températures Dct est une plage de températures comprise entre une température haute Th et une température basse Tb. Le domaine critique de températures Dct, variable selon la structure du giravion, peut tel que classiquement être identifié au cours de vols d'essais par calcul et/ou sur la base de l'expérience du pilote effectuant lesdits vols d'essai.

Sur l'exemple de réalisation illustré, il est considéré un domaine critique de températures Dct défini entre une température haute Th de l'ordre de moins 7°C et une température basse Tb de l'ordre de moins 18°C. Le domaine critique de températures Dct correspond typiquement à une plage de températures de l'air extérieur ambiant environnant le giravion, dans laquelle les pertes de performance du rotor sont les plus importantes.

Selon la démarche de la présente invention, le domaine critique de températures Dct est subdivisé en deux plages givrantes de températures, dites respectivement plage givrante de températures hautes Pth et plage givrante de températures basses Ptb, réparties de part et d'autre d'une température du domaine critique de températures, dite température médiane Tm.

Sur l'exemple de réalisation illustré, ladite température médiane Tm est de l'ordre de moins 15°C en étant définie par calcul selon la vitesse nominale d'entraînement du rotor et/ou selon l'agencement du rotor et notamment selon la structure des pales composant sa voilure.

Dans ce contexte, il est proposé de faire varier la vitesse d'entraînement du rotor, dite vitesse NR, lorsque le giravion évolue dans le domaine critique de températures Dct. Les modalités de variation de la vitesse NR sont différenciées selon les conditions d'évolution du giravion dans le domaine critique de températures Dct.

Plus particulièrement, il est fait le choix selon la présente invention d'augmenter la vitesse NR lorsque le giravion évolue dans la plage givrante de températures hautes Pth et de réduire la vitesse NR lorsque le giravion évolue dans la plage givrante de températures basses Ptb. En effet, lorsque le giravion évolue dans le domaine critique de températures Dct, les conditions de givrage des pales varient selon la plage givrante de températures considérée.

Dans la plage givrante de températures hautes Pth, l'eau contenue dans l'air extérieur ambiant est en surfusion. Lorsque le giravion évolue dans la plage givrante de températures hautes Pth, il est proposé d'augmenter la vitesse NR pour éviter un givrage des pales, en exploitant l'échauffement des pales résultant de l'impact contre leur bord d'attaque des gouttes d'eau en surfusion contenues dans l'air extérieur ambiant.

Dans la plage givrante de températures basses Ptb, il est proposé de diminuer la vitesse NR pour réduire la température de surface des pales du rotor.

Ces dispositions permettent de provoquer une formation de glace sur les pales, et notamment sur leur bord d'attaque, présentant des formes aérodynamiques limitant la perte de performances du rotor.

La fig.2 illustre des modalités de variation de la vitesse NR d'un rotor 1 d'un giravion évoluant dans le domaine critique de températures Dct conformément aux dispositions représentées sur la fig.1.

Le rotor 1 est entraîné en rotation par un groupe de motorisation 2 comprenant au moins un moteur à combustion, turbomoteur notamment. Le régime de fonctionnement du ou des moteurs à combustion est placé sous la dépendance d'une unité de régulation 3.

En fonction de consignes 22, dites consignes NR, générées par une unité de commande 4, l'unité de régulation 3 génère des commandes de régulation 5 du régime de fonctionnement du ou des moteurs à combustion du groupe de motorisation 2, telles que typiquement des commandes d'alimentation en carburant du ou des moteurs à combustion.

Classiquement le pas des pales du rotor, rotor principal notamment, varie collectivement et/ou cycliquement sous l'effet de commandes de vol CVm ou CVa générées par un pilote du giravion. Plus particulièrement, un pilote humain 11 dispose classiquement d'organes manuels de commande 6 générateurs de commandes manuelles de vol CVm sous l'effet de leur entraînement par l'homme.

Par ailleurs, le giravion est potentiellement équipé d'un pilote automatique 7 générant des commandes automatiques de vol CVa lorsqu'il est armé en au moins un mode de fonctionnement de stabilisation et/ou de guidage en vol du giravion.

Par ailleurs, le giravion est équipé d'une instrumentation de bord 8 comprenant notamment des capteurs et/ou des sondes permettant d'identifier les conditions de vol du giravion, notamment vis-à-vis de son environnement extérieur. L'instrumentation de bord 8 comprend notamment au moins un capteur de température 9 mesurant la température de l'air extérieur ambiant environnant le giravion et/ou un ou plusieurs détecteurs de givre 10.

L'instrumentation de bord 8 fournie classiquement des données relatives à une évolution du giravion sous conditions givrantes 12, tel qu'à partir d'une donnée de givrage 13 fournie par ledit au moins un détecteur de givre 10.

Une évolution du giravion sous conditions givrantes 12 peut aussi être identifiée par le pilote humain 11 du giravion, par exemple par constat visuel d'une formation de givre sur les surfaces extérieures du giravion ou par exemple encore à partir d'un ressenti d'un changement de comportement significatif du giravion, tel que notamment une variation de son comportement vibratoire. Le pilote humain 11 du giravion peut alors générer un ordre d'exécution 14 d'une variation de la vitesse NR par activation d'un bouton de commande 15 spécifique dédié à cet effet.

Une donnée de température 17 relative à la température OAT de l'air extérieur ambiant est transmise par le capteur de température 9 à un premier calculateur 16 préférentiellement intégré à l'unité de commande 4. Dans le cas d'une évolution du giravion sous conditions givrantes 12, le premier calculateur 16 identifie à partir de la donnée de température 17 les conditions d'évolution du giravion vis-à-vis du domaine critique de températures Dct.

Plus particulièrement selon la donnée de température 17, le premier calculateur 16 identifie une évolution du giravion dans la plage givrante de températures hautes Pth ou dans la plage givrante de températures basses Ptb.

Selon les conditions d'évolution du giravion dans l'une ou l'autre des plages givrantes de températures Pth ou Ptb respectivement hautes ou basses, le premier calculateur 16 identifie différents cas d'évolution du giravion pour lesquels l'unité de commande génère une consigne NR 22 spécifique.

Le premier calculateur 16 identifie les différents cas d'évolution du giravion par comparaison entre la donnée de température 17 avec chacune des températures bornant les plages givrantes de températures Pth et Ptb, à savoir d'une part la température haute Th et la température médiane Tm pour la plage givrante de température haute Pth, et d'autre part la température médiane Tm et la température basse Tb pour la plage givrante de températures basses Ptb.

Dans ce contexte, le premier calculateur 16 identifie notamment :

- ) un premier cas C1 selon lequel le giravion évolue dans un environnement extérieur d'une température OAT exclue du domaine critique de températures Dct.

- ) un deuxième cas C2 selon lequel le giravion évolue dans un environnement extérieur d'une température OAT comprise dans la plage givrante de températures hautes Pth,

- ) un troisième cas C3 selon lequel le giravion évolue dans un environnement extérieur d'une température OAT comprise dans la plage givrante de températures basses Ptb.

Un deuxième calculateur 18 exécute une règle de calcul 19 intégrant au moins une loi de calcul de la consigne NR, dite loi de calcul NR sous conditions givrantes Lg, déterminant la valeur de la consigne NR selon le cas d'évolution du giravion préalablement identifiée par le premier calculateur 16.

Bien évidemment le premier calculateur 16 et le deuxième calculateur 18 sont potentiellement intégrés dans une même unité de calcul de préférence intégrée dans l'unité de commande 4. Cependant de manière analogue, le premier calculateur 16, le deuxième calculateur 18 voire ladite unité de calcul peuvent être intégrés dans un quelconque moyen de calcul équipant le giravion.

Il est à noter que tel que classiquement dans le cadre d'une variation commandée de la vitesse NR, la vitesse NR varie dans une plage 20 de variation de vitesses NR prédéfinie entre une vitesse NR minimale NRmin et une vitesse NR maximale NRmax typiquement identifiées par rapport à une vitesse de rotation nominale NRmom. A titre indicatif en ce qui concerne un rotor principal, la vitesse NR minimale NRmin est de l'ordre de 92% de la vitesse de rotation nominale NRnom et la vitesse NR maximale NRmax est de l'ordre de 107% de la vitesse de rotation nominale NRnom. Il est bien évidemment compris que les valeurs indiquées de la vitesse NR minimale NRmin et de la vitesse NR maximale MRmax sont données à titre indicatif et peuvent varier selon les capacités du giravion voire encore l'évolution des techniques.

La consigne NR est plus particulièrement calculée par application de la loi de calcul NR sous conditions givrantes Lg selon les modalités suivantes :

- ) dans le cas C1 où la température OAT de l'air extérieur ambiant est exclue du domaine critique de températures Dct, la génération par l'unité de commande 4 de la consigne NR courante est maintenue,

- ) dans le cas C2 où la température OAT de l'air extérieur ambiant est comprise dans la plage de températures hautes Pth, la consigne NR 22 courante est augmentée,

- ) dans le cas C3 où la température OAT de l'air extérieur ambiant est comprise dans la plage givrante de températures basses Ptb, la valeur de la consigne NR 22 courante est diminuée.

Conformément à l'application de la loi de calcul NR sous conditions givrantes 12, la valeur de la consigne NR varie potentiellement selon diverses modalités alternatives telles que par exemple les modalités suivantes :

- ) soit par application de valeurs prédéfinies, tel que par exemple la vitesse NR maximale NRmax dans le deuxième cas C2 d'évolution du giravion et la vitesse NR minimale NRmin dans le troisième cas C3 d'évolution du giravion,

- ) soit par variation de la valeur de la consigne NR 22 selon la variation de la température OAT de l'air extérieur ambiant dans la plage givrante de températures Pth ou Ptb considérée, de préférence considérée par tranche de variation de température, à titre d'exemple par tranche de 2°C.

Par ailleurs, il est à prendre en considération le fait que la règle de calcul 19 intègre potentiellement diverses lois de calcul L1 .../... Ln de la consigne NR 22 selon divers critères, tels que par exemple les critères suivants non limitatifs :

- ) un critère de vitesse de progression ou de variation d'attitude du giravion,

- ) un critère relatif à la phase de vol du giravion, tel qu'en phase de décollage, d'atterrissage ou de progression du giravion en vol de croisière,

- ) un critère de réduction des nuisances sonores générées par le giravion,

- ) un critère relatif à l'altitude et/ou à la hauteur-sol d'évolution du giravion.

Dans ce contexte, il est souhaitable que la génération de la consigne NR 22 par application de l'une au moins des lois de calcul L1 .../... Ln ; Lg de la consigne NR 22 soit déterminée selon une classification de priorité évitant d'éventuels conflits entre les différentes lois de calcul L1 .../... Ln ; Lg de la consigne NR 22.

A cette fin, le deuxième calculateur 18 applique une table 21 prédéfinie d'exécution prioritaire des différentes lois de calcul L1 .../... Ln ; Lg intégrées dans la règle de calcul 19. La table 21 identifie les priorités d'exécution et/ou de prise en compte des différentes lois de calcul L1 .../... Ln ; Lg de la consigne NR en fonction de différents critères de sélection prédéfinis.

A titre indicatif, de tels critères de sélection relèvent notamment d'une prise en compte d'une évolution du giravion sous conditions de vol sécurisé, au regard par exemple de sa phase courante de vol, des conditions climatiques, de ses ressources propres en puissance mécanique, de sa mission de vol et/ou d'une éventuelle évolution du giravion en milieu hostile.

**Revendications**

1. Méthode de régulation d'une vitesse, dite vitesse NR, d'entraînement en rotation d'au moins un rotor (1) d'un giravion, la vitesse NR variant dans une plage (20) de variation de vitesses NR prédéfinie sous contrôle d'au moins une unité de commande (4) génératrice d'une consigne, dite consigne NR (22), à partir de laquelle consigne NR (22) est régulé, par une unité de régulation (3), le régime de fonctionnement d'au moins un turbomoteur fournissant la puissance mécanique au moins nécessaire à l'entraînement dudit au moins un rotor (1) à une vitesse NR conforme à la consigne NR (22),
**caractérisée en ce que** la méthode comprend les opérations suivantes :

   - ) détection d'une évolution du giravion sous conditions givrantes (12),
   - ) mesure par l'instrumentation de bord (8) du giravion de la température (OAT) de l'air extérieur ambiant environnant le giravion et détection d'une évolution du giravion dans un environnement extérieur d'une température (OAT) ambiante comprise dans une plage de valeurs prédéfinie, dite domaine critique de températures (Dct), identifiée entre une température haute (Th) et une température basse (Tb) prédéterminées, puis
   - ) par suite d'une détection d'une évolution du giravion dans un environnement extérieur d'une température (OAT) ambiante comprise dans ledit domaine critique de températures (Dct), et étant considéré des plages givrantes de températures respectivement basses (Ptb) et hautes (Pth) s'étendant de part et d'autre d'une température, dite médiane (Tm), du domaine critique de températures (Dct) comprise entre lesdites températures respectivement basse (Tb) et haute (Th), application par l'unité de commande (4) d'une loi de calcul d'une consigne NR (22), dite loi de calcul NR sous conditions givrantes (Lg), selon les modalités suivantes :

      - ) diminuer la vitesse NR dans le cas où la température (OAT) de l'air extérieur ambiant est comprise dans la plage givrante de températures basses (Ptb) du domaine critique de températures (Dct), et
      - ) augmenter la vitesse NR dans le cas où la température (OAT) de l'air extérieur ambiant est comprise dans la plage givrante de températures hautes (Pth) du domaine critique de températures (Dct).

2. Méthode selon la revendication 1,
**caractérisée en ce que** la méthode comprend les opérations suivantes :

   - ) détection d'une évolution du giravion sous conditions givrantes (12), comprenant au moins une opération de mesure par l'instrumentation de bord (8) du giravion de la température (OAT) de l'air extérieur ambiant environnant le giravion,
   - ) identification d'une évolution du giravion à une température (OAT) de l'air extérieur ambiant comprise soit dans l'une soit dans l'autre des plages givrantes de températures respectivement basses (Ptb) et hautes (Pth) du domaine critique de températures (Dct), par comparaison de la température (OAT) de l'air extérieur ambiant avec les températures (Th,Tm,Tb) bornant chacune desdites plages givrantes de températures (Pth,Ptb),
   - ) identifier la valeur de la consigne NR (22) courante générée par l'unité de commande 4, puis

      *) dans le cas (C1) où la température (OAT) de l'air extérieur ambiant est exclue du domaine critique de températures (Dct), maintenir la génération par l'unité de commande (4) de la consigne NR (22) courante,
      *) dans le cas (C2) où la température (OAT) de l'air extérieur ambiant est comprise dans la plage de températures hautes (Pth), augmenter par l'unité de commande (4) la valeur de la consigne NR (22) courante dans la plage (20) de variation de vitesses NR,
      *) dans le cas (C3) où la température (OAT) de l'air extérieur ambiant est comprise dans la plage givrante de températures basses (Ptb), diminuer par l'unité de commande (4) la valeur de la consigne NR (22) courante dans la plage (20) de variation de vitesses NR.

3. Méthode selon l'une quelconque des revendications 1 et 2,
**caractérisée en ce que** les opérations alternatives d'augmentation et inversement de diminution de la vitesse NR sous conditions givrantes (12) sont opérées conformément à l'application de consignes NR (22) respectives de valeurs égales aux valeurs bornant ladite plage (20) de variation de vitesses NR.

4. Méthode selon l'une quelconque des revendications 1 et 2,
**caractérisée en ce que** les opérations alternatives d'augmentation et inversement de diminution de la vitesse NR sous conditions givrantes (12) sont opérées conformément à l'application de consignes NR (22) respectives dont les valeurs varient selon la variation de la température (OAT) de l'air extérieur ambiant dans la plage givrante de températures (Pth,Ptb) considérée.

5. Méthode selon la revendication 4,
**caractérisée en ce que** la variation de valeur des consignes NR (22) selon la variation de la température (OAT) de l'air extérieur ambiant est opérée par prise en compte de tranches de variation de températures prédéfinies.

6. Méthode selon l'une quelconque des revendications 1 à 5,
**caractérisée en ce que** ladite loi de calcul NR sous conditions givrantes (Lg) est appliquée sous réserve de l'exécution prioritaire d'au moins une quelconque autre loi de calcul (L1.../...Ln) provoquant une variation de la vitesse NR, conformément à l'application d'une table (21) prédéfinie d'exécution prioritaire de différentes lois de calcul (L1.../...Ln ;Lg) prédéfinies d'une variation de la vitesse NR.

7. Méthode selon l'une quelconque des revendications 1 à 6,
**caractérisée en ce que** ladite loi de calcul NR sous conditions givrantes (Lg) est intégrée dans une règle de calcul (19) intégrant en outre au moins une quelconque autre loi de calcul (L1 .../... Ln) provoquant une variation de la vitesse NR.

8. Méthode selon l'une quelconque des revendications 1 à 7,
**caractérisée en ce que** l'évolution du giravion sous conditions givrantes (12) est détectée par un pilote humain (11) du giravion générant alors un ordre d'exécution (14) de la loi de calcul NR sous conditions givrantes (Lg).

9. Méthode selon l'une quelconque des revendications 1 à 8,
**caractérisée en ce que** l'évolution du giravion sous conditions givrantes (12) est détectée par au moins un détecteur de givre (10) générant alors une donnée de givrage (13) provoquant l'exécution de la loi de calcul NR sous conditions givrantes (Lg).

10. Méthode selon l'une quelconque des revendications 1 à 9,
**caractérisée en ce que** ladite température médiane (Tm) est déterminée par la fonction de calcul suivante :

$$OAT_{(critique)} = - ((y\text{-}1) / 2yA) * ((2\pi * NR * R) / 60)^2$$

Dans laquelle fonction de calcul :

- ) $OAT_{(critique)}$ est ladite température médiane (Tm),
- ) y est une constante d'une valeur de 1,4
- ) A est d'une valeur de 287 J/Kg°K
- ) NR est la vitesse NR courante du rotor (1),
- ) R est le rayon du rotor (1), l'expression (($2\pi * NR * R$) / 60) identifiant la vitesse du bout de ladite pale considérée.

**Patentansprüche**

1. Verfahren zum Regulieren einer Drehantriebsgeschwindigkeit NR mindestens eines Rotors (1) eines Drehflügelflugzeugs, wobei die Geschwindigkeit NR in einem vorbestimmten Geschwindigkeits-Variationsbereich (20) unter der Kontrolle mindestens einer Kontrolleinheit (4) variiert, die einen Sollwert NR (22) erzeugt, von dem ausgehend durch eine Regulierungseinheit (3) die Betriebsbedingungen mindestens eines Turbomotors geregelt werden, der die mechanische Leistung liefert, die mindestens für den Antrieb des mindestens einen Rotors (1) mit einer Geschwindigkeit NR entsprechend dem Sollwert NR (22) erforderlich ist,
**dadurch gekennzeichnet, dass** das Verfahren die folgenden Schritte aufweiset:

- ) Erfassung einer Bewegung des Drehflügelflugzeugs unter Vereisungsbedingungen (12),
- ) Messung der Temperatur (OAT) der Umgebungsluft um das Drehflügelflugzeug herum durch Bordinstrumente (8) des Drehflügelflugzeugs und Erfassung einer Bewegung des Drehflügelflugzeugs in einer äußeren Umgebung mit einer Umgebungstemperatur (OAT), die in einem Bereich vordefinierter Werte liegt, wobei der Bereich kritischer Temperaturbereich (Dct) genannt wird, der zwischen einer vorbestimmten hohen Temperatur (Th) und einer vorbestimmten niedrigen Temperatur (Tb) liegt, und

- ) nach einer Erfassung einer Bewegung des Drehflügelflugzeugs in einer äußeren Umgebung mit einer Umgebungstemperatur (OAT), die in dem kritischen Temperaturbereich (Dct) liegt, und unter Berücksichtigung, dass sich Vereisungsbereiche bei tiefen (Ptb) und hohen (Pth) Temperaturen zu beiden Seiten einer mittleren Temperatur (Tm) des kritischen Temperaturbereichs (Dct) zwischen der jeweiligen niedrigen (Tb) und hohen (Th) Temperatur erstrecken, Anwendung einer Regel zur Berechnung eines Sollwerts NR (22) durch die Steuereinheit, genannt Rechenregel NR, unter Vereisungsbedingungen (Lg) gemäß den folgenden Modalitäten:
- ) Verringerung der Geschwindigkeit NR in dem Fall, in dem die Temperatur (OAT) der Außenluft in dem Vereisungsbereich bei niedrigen Temperaturen (Ptb) des kritischen Temperaturbereichs (Dct) liegt, und
- ) Erhöhen der Geschwindigkeit NR in dem Fall, in dem die Temperatur (OAT) der äußeren Umgebungsluft in dem Vereisungsbereich bei hohen Temperaturen (Pth) des kritischen Temperaturbereichs (Dct) liegt.

2. Verfahren nach Anspruch 1,
   **dadurch gekennzeichnet, dass** das Verfahren die folgenden Schritte aufweist:

   - ) Erfassung einer Bewegung des Drehflügelflugzeugs unter Vereisungsbedingungen (12) mit mindestens einem Schritt der Messung der Temperatur (OAT) der Umgebungsluft um das Drehflügelflugzeug herum durch Bordinstrumente (8) des Drehflügelflugzeugs,
   - Erfassung einer Bewegung des Drehflügelflugzeugs bei einer Temperatur (OAT) der umgebenden Außenluft, die entweder in dem einen oder in dem anderen Vereisungstemperaturbereich liegt, die einen niedrigen (Ptb) und einen hohen (Pth) Bereich des kritischen Temperaturbereichs (Dct) umfassen, durch Vergleich der Temperatur (OAT) der äußeren Umgebungsluft mit den Temperaturen (Th, Tm, Db), die jeden der Vereisungstemperaturbereiche (Pth, Ptb) abgrenzen,
   - Identifizierung des aktuellen Sollwerts NR (22), der von der Steuereinheit (4) erzeugt wird, und

     *) in dem Fall (C1), in dem die Temperatur (OAT) der äußeren Umgebungsluft aus dem kritischen Temperaturbereich (Dct) ausgeschlossen ist, Beibehalten der Erzeugung des aktuellen Sollwertes NR (22) durch die Steuereinheit (4),
     *) in dem Fall (C2), in dem die Temperatur (OAT) der äußeren Umgebungsluft in dem hohen Temperaturbereich (Pth) liegt, Erhöhen des aktuellen Sollwertes NR (22) in dem Bereich (20) der Geschwindigkeitsänderung NR durch die Steuereinheit (4),
     *) in dem Fall (C3), in dem die Temperatur (OAT) der äußeren Umgebungsluft in dem unteren Vereisungstemperaturbereich (Ptb) liegt, Verringern des aktuellen Sollwertes NR (22) in dem Änderungsbereich der Geschwindigkeiten NR durch die Steuereinheit (4) .

3. Verfahren nach einem der Ansprüche 1 und 2,
   **dadurch gekennzeichnet, dass** die alternativen Schritte der Erhöhung und umgekehrt der Verminderung der Geschwindigkeit NR unter Vereisungsbedingungen (12) durchgeführt werden in Übereinstimmung mit der Verwendung von jeweiligen Sollwerten NR (22), die gleich Werten sind, die den Änderungsbereich von Geschwindigkeiten NR eingrenzen.

4. Verfahren nach einem der Ansprüche 1 und 2,
   **dadurch gekennzeichnet, dass** die alternativen Schritte der Erhöhung und umgekehrt der Verminderung der Geschwindigkeit NR unter Vereisungsbedingungen (12) ausgeführt werden in Übereinstimmung mit der Verwendung von jeweiligen Sollwerten NR (22), deren Werte sich mit der Änderung der Temperatur (OAT) der äußeren Umgebungsluft in dem betrachteten Vereisungstemperaturbereich (Pth, Ptb) ändern.

5. Verfahren nach Anspruch 4,
   **dadurch gekennzeichnet, dass** die Änderung des Sollwerts NR (22) gemäß der Änderung der Temperatur (OAT) der äußeren Umgebungsluft durch Berücksichtigung von vorbestimmten Temperaturänderungsabschnitten durchgeführt wird.

6. Verfahren nach einem der Ansprüche 1 bis 5,
   **dadurch gekennzeichnet, dass** die Regel zur Berechnung von NR unter Vereisungsbedingungen (Lg) angewendet wird unter dem Vorbehalt der bevorzugten Ausführung mindestens einer anderen Rechenregel (L1 .../... Ln), die zu einer Änderung der Geschwindigkeit NR führt in Übereinstimmung mit einer Verwendung einer vordefinierten Liste (21) bevorzugter Ausführungen von verschiedenen vordefinierten Rechenregeln (L1 --- / --- Ln; Lg) zur Berechnung einer Änderung der Geschwindigkeit NR.

**7.** Verfahren nach einem der Ansprüche 1 bis 6,
**dadurch gekennzeichnet, dass** die Regel zur Berechnung von NR unter Vereisungsbedingungen (Lg) in eine Rechenregel (19) integriert ist, die außerdem mindestens eine weitere Rechenregel (L1 .../... Ln) integriert, die eine Änderung der Geschwindigkeit NR bewirkt.

**8.** Verfahren nach einem der Ansprüche 1 bis 7,
**dadurch gekennzeichnet, dass** die Bewegung des Drehflügelflugzeugs unter Vereisungsbedingungen (12) durch einen menschlichen Piloten (11) des Drehflügelflugzeugs erfasst wird, der somit eine Ausführungsreihenfolge (14) der Regel zur Berechnung von NR unter Vereisungsbedingungen (Lg) erzeugt.

**9.** Verfahren nach einem der Ansprüche 1 bis 8,
**dadurch gekennzeichnet, dass** die Bewegung des Drehflügelflugzeugs unter Vereisungsbedingungen (12) von mindestens einem Vereisungsdetektor (10) erfasst wird, der einen Vereisungsparameter (13) erzeugt, der die Ausführung der Regel zur Berechnung von NR unter Vereisungsbedingungen (Lg) bewirkt.

**10.** Verfahren nach einem der Ansprüche 1 bis 9,
**dadurch gekennzeichnet, dass** die mittlere Temperatur (Tm) bestimmt wird durch die folgende Gleichung:

$$OAT_{(kritisch)} = - ((y-1)/2yA) * ((2\pi * NR * R)/60)^2 \, ,$$

wobei in der Gleichung bedeuten:

- ) $OAT_{(kritisch)}$ die mittlere Temperatur (Tm),
- ) y eine Konstante mit dem Wert 1,4,
- ) A einen Wert von 287 J/Kg*K,
- ) NR die aktuelle Geschwindigkeit NR des Rotors (1),
- ) R den Radius des Rotors (1), wobei der Ausdruck $((2\pi * NR * R)/60)$ die Geschwindigkeit der Spitze des betrachteten Rotorblatts identifiziert.

**Claims**

**1.** Method of regulating a speed, referred to as the NR speed, of driving in rotation at least one rotor (1) of a rotorcraft, the NR speed varying in a predefined range (20) of variation of NR speed under control of at least one control unit (4) generating a setpoint, referred to as the NR setpoint (22), starting from which NR setpoint (22) is regulated, by a regulating unit (3), the operating regimen of at least one turboengine supplying the mechanical power at least necessary for driving said at least one rotor (1) at an NR speed in accordance with the NR setpoint (22), **characterised in that** the method comprises the following operations:

- ) detection of a movement of the rotorcraft under icing conditions (12),
- ) measurement by the on-board instrumentation (8) of the rotorcraft of the ambient outside air temperature (OAT) surrounding the rotorcraft and detection of a movement of the rotorcraft in an outside environment of an ambient temperature (OAT) comprised in a predefined range of values, referred to as the critical temperature domain (Dct), identified between a predetermined high temperature (Th) and a predetermined low temperature (Tb), and then
- ) as a result of a detection of a movement of the rotorcraft in an outside environment of an ambient temperature (OAT) comprised in said critical temperature domain (Dct), and taking into consideration respectively low (Ptb) and high (Pth) icing temperature ranges extending on one side and on the other side of a temperature, referred to as the median (Tm), of the critical temperature domain (Dct) comprised between said respectively low (Tb) and high (Th) temperatures, application by the control unit (4) of a law for calculation of an NR setpoint (22), referred to as the law for NR calculation under icing conditions (Lg), according to the following modalities:

- decreasing the NR speed in the case where the ambient outside air temperature (OAT) is comprised in the low temperature icing range (Ptb) of the critical temperature domain (Dct), and
- increasing the NR speed in the case where the ambient outside air temperature (OAT) is comprised in the high temperature icing range (Pth) of the critical temperature domain (Dct).

2. Method according to claim 1,
   **characterised in that** the method comprises the following operations:

   - ) detection of a movement of the rotorcraft under icing conditions (12), comprising at least one operation of measurement by the on-board instrumentation (8) of the rotorcraft of the ambient outside air temperature (OAT) surrounding the rotorcraft,
   - ) identification of a movement of the rotorcraft at an ambient outside air temperature (OAT) comprised either in one or in the other of the respectively low (Ptb) and high (Pth) temperature icing ranges of the critical temperature domain (Dct), by comparison of the ambient outside air temperature (OAT) with the temperatures (Th,Tm,Tb) bounding each of said temperature icing ranges (Pth,Ptb),
   - identifying the current NR setpoint value (22) generated by the control unit (4), and then:

     - ) in the case (C1) where the ambient outside air temperature (OAT) is excluded from the critical temperature domain (Dct), maintaining the generation by the control unit (4) of the current NR setpoint (22),
     - ) in the case (C2) where the ambient outside air temperature (OAT) is comprised in the high temperature range (Pth), increasing by the control unit (4) the value of the current NR setpoint (22) in the range (20) of variation of NR speed,
     - ) in the case (C3) where the ambient outside air temperature (OAT) is comprised in the low temperature icing range (Ptb), decreasing by the control unit (4) the value of the current NR setpoint (22) in the range (20) of variation of NR speed.

3. Method according to any one of claims 1 and 2, **characterised in that** the alternative operations of increasing and conversely decreasing the NR speed under icing conditions (12) are performed in accordance with the application of respective NR setpoints (22) of values equal to the values bounding said range (20) of variation of NR speed.

4. Method according to any one of claims 1 and 2,
   **characterised in that** the alternative operations of increasing and conversely decreasing the NR speed under icing conditions (12) are performed in accordance with the application of respective NR setpoints (22), the values of which vary according to the variation of the ambient outside air temperature (CAT) in the temperature icing range (Pth,Ptb) considered.

5. Method according to claim 4,
   **characterised in that** the variation of value of the NR setpoints (22) according to the variation of the ambient outside air temperature (OAT) is performed by taking account of predefined slices of temperature variation.

6. Method according to any one of claims 1 to 5,
   **characterised in that** said law for NR calculation under icing conditions (Lg) is applied subject to the priority execution of at least any one other calculation law (L1.../...Ln) causing a variation of the NR speed, in accordance with the application of a predefined table (21) of priority execution of various predefined calculation laws (L1.../...Ln ;Lg) for calculating a variation of the NR speed.

7. Method according to any one of claims 1 to 6,
   **characterised in that** said law for NR calculation under icing conditions (Lg) is incorporated in a calculation rule (19) incorporating also at least any one other calculation law (L1.../...Ln) causing a variation of the NR speed.

8. Method according to any one of claims 1 to 7,
   **characterised in that** the movement of the rotorcraft under icing conditions (12) is detected by a human pilot (11) of the rotorcraft then generating an order for execution (14) of the law for NR calculation under icing conditions (Lg).

9. Method according to any one of claims 1 to 8,
   **characterised in that** the movement of the rotorcraft under icing conditions (12) is detected by at least one icing detector (10) then generating icing data (13) causing the execution of the law for NR calculation under icing conditions (Lg).

**10.** Method according to any one of claims 1 to 9,
**characterised in that** said median temperature (Tm) is determined by the following calculation function:

$$\text{OAT}_{(critical)} = -((y-1)/2yA)*((2\pi*NR*R)/60)^2$$

In which calculation function:

- ) $OAT_{(critical)}$ is the median temperature (Tm),
- ) y is a constant having a value of 1.4
- ) A has a value of 287 J/Kg°K
- ) NR is the current NR speed of the rotor (1),
- ) R is the radius of the rotor (1), the expression $((2\pi*NR*R)/60)$ identifying the speed of the tip of said blade considered.

fig.1

fig.2

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- GB 2046690 A
- FR 3000465
- US 2007118254 A, BARNES G.W.
- WO 2010143051 A, AGUSTA SPA
- EP 1936186 A
- US 20120226485 A, CREAGH A.
- EP 2626557 A